# EUROPEAN PATENT SPECIFICATION

(11) **EP 4 560 139 B1**
(45) Date of publication and mention of the grant of the patent: **04.11.2026**
(21) Application number: 25169736.3
(22) Date of filing: 22.02.2021
(51) Int. Cl.: F03D 80/00, B63B 23/18, F03D 80/50, B66C 23/20, F03D 13/10, F03D 80/80

(54) **MULTIPLE UP-TOWER LIFTING APPLIANCES ON WIND TURBINES**
MEHRERE HUBVORRICHTUNGEN AUF EINEM TURM FÜR WINDTURBINEN
APPAREILS DE LEVAGE À TOURS MONTANTES MULTIPLES SUR ÉOLIENNES

(30) Priority: 28.02.2020 US 202062982957 P
(43) Date of publication of application: 28.05.2025
(62) Document number(s) of the earlier application(s) in accordance with Art. 76 EPC: 21759009.0 / 4 111 056
(73) Proprietor: LiftWerx Solutions Inc., Cambridge, ON N1T 1N7 (CA)
(72) Inventor: AITKEN, Glen D., Ontario, N1M 1W2 (CA)
(74) Representative: Rasmussen, Martin Hoffgaard

(56) References cited:
- WO-A1-2012/105971
- WO-A1-2016/055065
- WO-A1-2019/213748
- CA-A1- 2 997 876
- US-A1- 2010 021 278

## Description

### Field

This application relates to wind turbines, in particular to a nacelle-mounted multiple-appliance lift system on a wind turbine that provides multiple up-tower lifting appliances in a nacelle of the wind turbine.

### Background

Installation and repair of wind turbine components, for example the main bearing, the main shaft, rotor blades and the like, require the use of cranes to lift the components up to and down from the nacelle. Large ground-supported cranes may be used, but such cranes are expensive to use and transport to wind turbine sites. For this reason, lift systems mounted in the nacelle of the wind turbine have become increasingly popular.

Various light-duty service cranes that can be mounted up-tower in the nacelle are known in the art. Such light-duty cranes are typically provided with a dedicated mounting platform, and are used to lift various items up to and down from the nacelle. However, the light-duty service crane is insufficiently robust and improperly placed to effectively lift heavy wind turbine components such as the main bearing, the main shaft and the rotor blades. For this reason, the light-duty service crane may be used to lift the parts of another heavier-duty lifting appliance, which is then mounted somewhere in the nacelle. Even so, this other lifting appliance is also often insufficiently robust for certain tasks, but may be used to lift the parts of a yet heavier-duty lifting appliance up to and down from the nacelle, which must also be mounted somewhere in the nacelle. Unfortunately, there are very few structures in the nacelle capable of supporting such heavier-duty lifting appliances, and supporting multiple lifting appliances in the nacelle is problematic.

WO 2019/213748 A1 published November 14, 2019 describes a lift system mountable in a nacelle of a wind turbine, the lift system having a boom that extends over a hub of the wind turbine, a frame structure for mounting a proximal end of the boom in the nacelle and a trolley movably mounted on the boom to permit translation of the trolley along the boom.

CA 2 997 876 A1 published September 10, 2018 describes a lift system reversibly mountable on a wind turbine, the lift system having a boom pivotally connected to a base, a back mast pivotally connected to the base, rigging connecting the boom to the back mast and a back mast counterweight.

There remains a need for a system whereby multiple up-tower lifting appliances may be supported in the nacelle of a wind turbine.

### Summary

A method of assembling a nacelle-mounted multiple-appliance lift system to a nacelle of a wind turbine, comprises: mounting a portion of a common support for lifting appliances to the nacelle of the wind turbine; mounting a first lifting appliance on the portion of the common support; assembling the common support to the nacelle, the assembled common support comprising: at least two pillow block bridges secured to at least two of a plurality of gearbox pillow blocks and spaced apart transversely in the nacelle; and, longitudinal and transverse beams supported on the at least two of the plurality of gearbox pillow blocks; operating the first lifting appliance to lift a second lifting appliance into the nacelle; mounting the second lifting appliance on at least a portion of the common support; operating the first or second lifting appliance to lift a third lifting appliance into the nacelle; mounting the third lifting appliance on the common support; operating the first, second or third lifting appliance to lift a fourth lifting appliance into the nacelle; and, mounting the fourth lifting appliance on the common support.

A nacelle-mounted multiple-appliance lift system, the lift system comprising: a first lifting appliance mounted to a nacelle of a wind turbine proximate a first side of the nacelle; a second lifting appliance mounted to the nacelle of the wind turbine proximate the first side of the nacelle, proximate a second side of the nacelle or proximate a longitudinal centerline of the nacelle between the first side and the second side of the nacelle; a third lifting appliance mounted to the nacelle of the wind turbine proximate the first side of the nacelle, proximate the second side of the nacelle or proximate a longitudinal centerline of the nacelle between the first and second sides of the nacelle; a fourth lifting appliance mounted to the nacelle of the wind turbine proximate the first side of the nacelle, proximate the second side of the nacelle or proximate a longitudinal centerline of the nacelle between the first and second sides of the nacelle; and, a common support for the first, second, third and fourth lifting appliances, the wind turbine comprising a plurality of gearbox pillow blocks, the common support mounted on at least two of the plurality of gearbox pillow blocks, the common support comprising: at least two pillow block bridges secured to the at least two of the plurality of gearbox pillow blocks and spaced apart transversely in the nacelle; and, longitudinal beams and transverse beams supported on the at least two of the plurality of gearbox pillow blocks.

The lift system permits utilizing multiple lifting appliances, in particular heavy-duty lifting appliances, mounted at the same time in the restricted space of the nacelle. The lift system is therefore capable of being used for a variety of different lifting tasks from the nacelle of the wind turbine, including but not limited to installation, removal and repair of wind turbine components such as the main bearing, the main shaft, the gearbox, the generator, the yaw drives and the rotor blades.

Further features will be described or will become apparent in the course of the following detailed description. It should be understood that each feature described herein may be utilized in any combination with any one or more of the other described features, and that each feature does not necessarily rely on the presence of another feature except where evident to one of skill in the art.

### Brief Description of the Drawings

For clearer understanding, preferred embodiments will now be described in detail by way of example, with reference to the accompanying drawings, in which:
Fig. 1A depicts a top view of a wind turbine with a lid of a nacelle removed and without any lifting appliances mounted in the nacelle;
Fig. 1B depicts a rear right side perspective view of the wind turbine of Fig. 1A;
Fig. 1C depicts a rear left side perspective view of the wind turbine of Fig. 1A;
Fig. 1D depicts a magnified view of Fig. 1C;
Fig. 2A depicts a rear left side perspective view of a lifting appliance support base mountable in the nacelle of the wind turbine of Fig. 1A;
Fig. 2B depicts a top view of the base of Fig. 2A;
Fig. 2C depicts a front right side perspective view of the base of Fig. 2A;
Fig. 3A depicts a top view of the wind turbine of Fig. 1A having parts of the lifting appliance support base of Fig. 2A mounted in the nacelle and having a light-duty service crane mounted thereon;
Fig. 3B depicts a rear right side perspective view of the wind turbine of Fig. 3A;
Fig. 3C depicts a rear left side perspective view of the wind turbine of Fig. 3A;
Fig. 3D depicts a top view of the wind turbine of Fig. 3A magnified in the region showing the gearbox, main shaft and main bearing;
Fig. 3E depicts a rear perspective view of Fig. 3D;
Fig. 4A depicts a top view of the wind turbine of Fig. 3A having further parts of the lifting appliance support base of Fig. 2A mounted in the nacelle;
Fig. 4B depicts a rear perspective view of Fig. 4A;
Fig. 5A depicts a top view of the wind turbine of Fig. 4A having yet further parts of the lifting appliance support base of Fig. 2A mounted in the nacelle;
Fig. 5B depicts a rear perspective view of Fig. 5A;
Fig. 6A depicts a top view of the wind turbine of Fig. 5A having all parts of the lifting appliance support base of Fig. 2A mounted in the nacelle;
Fig. 6B depicts a rear perspective view of Fig. 6A;
Fig. 7A depicts a top view of the wind turbine of Fig. 1A having the lifting appliance support base of Fig. 2A mounted in the nacelle with the light-duty service crane and a medium-duty knuckle-boom crane mounted in the nacelle;
Fig. 7B depicts a rear right side perspective view of the wind turbine of Fig. 7A;
Fig. 7C depicts a rear left side perspective view of the wind turbine of Fig. 7A;
Fig. 8A depicts a rear right side perspective view of the wind turbine of Fig. 1A having the lifting appliance support base of Fig. 2A mounted in the nacelle with the light-duty service crane, the medium-duty knuckle-boom crane and a heavy-duty jib crane mounted in the nacelle to form a single lift system;
Fig. 8B depicts a top view of the wind turbine of Fig. 8A;
Fig. 8C depicts a rear right side perspective view of the wind turbine of Fig. 8A magnified in the region showing the gearbox, main shaft and main bearing;
Fig. 8D depicts a rear left side perspective view of the wind turbine of Fig. 8A magnified in the region showing the gearbox, main shaft and main bearing;
Fig. 8E depicts a front right side perspective view of the wind turbine of Fig. 8A magnified in the region showing the gearbox, main shaft and main bearing with a rotor omitted;
Fig. 9A depicts a perspective view of an alternative embodiment of a lifting appliance support base mountable in the nacelle of a wind turbine and capable of additionally supporting a super heavy-duty boom hoist in the nacelle;
Fig. 9B depicts a perspective view of the lifting appliance support base of Fig. 9A having the light-duty service crane, the medium-duty knuckle-boom crane, the heavy-duty jib crane and the super heavy-duty boom hoist mounted thereon to form an alternative single lift system; and,
Fig. 9C, Fig. 9D, Fig, 9E and Fig. 9F serially illustrate how the lifting appliance support base of Fig. 9A is assembled in the nacelle together with the light-duty service crane, the medium-duty knuckle-boom crane, the heavy-duty jib crane and the super heavy-duty boom hoist to assemble the single lift system of Fig. 9B.

### Detailed Description

A single lift system comprising a plurality of lifting appliances mounted at one or more common locations in a nacelle of a wind turbine provides a unified solution to many, if not all, lifting tasks required for the installation, removal and repair of wind turbine components. Some examples of suitable lifting appliances for use in the lift system are disclosed in WO 2019/100146 published May 31, 2019, WO 2019/213748 published November 14, 2019, USSN 16/552,072 filed August 27, 2019 and USSN 62/924,475 filed October 22, 2019.

The plurality of lifting appliances comprises two, three, four or more lifting appliances. At a minimum, two of the plurality of lifting appliances share one or both of the at least one main bearing housing securement and the at least one gearbox pillow block. In some embodiments, two lifting appliances share both the at least one main bearing housing securements and the at least one gearbox pillow blocks. In addition to the at least one main bearing housing securement and the at least one gearbox pillow block, one or more of the lifting appliances may also be mounted somewhere else in the nacelle, for example to one or more of a dedicated mounting platform, a bedplate (e.g. at yaw drive pockets or lifting lugs), a torque arm or a generator housing. In some embodiments, a third lifting appliance may be mounted in the nacelle, for example on the at least one main bearing housing securement, the at least one gearbox pillow block, a dedicated mounting platform, a bedplate, a torque arm, a generator housing or any combination thereof. In one embodiment, the third lifting appliance is mounted on a dedicated mounting platform.

In some embodiments, at least two lifting appliances are supported together on a common support. In some embodiments, the common support is mounted on the at least one main bearing housing securement, on the at least one gearbox pillow block or on both the at least one main bearing housing securement and the at least one gearbox pillow support. In some embodiments, the common support is mounted on both the at least one main bearing housing securement and the at least one gearbox pillow block. In some embodiment, the common support is mounted on the at least one gearbox pillow block and in at least one yaw drive pocket.

The at least one main bearing housing securement is preferably at least two main bearing housing securements, for example two main bearing housing securements. The at least one gearbox pillow support is preferably at least two gearbox pillow supports, for example two, three or four gearbox pillow supports. The at least one yaw drive pocket is preferably at least two yaw drive pockets, for example two yaw drive pockets.

In some embodiments, the common support comprises at least two pillow block bridges secured to the gearbox pillow blocks and spaced apart transversely in the nacelle. In some embodiment, the common support comprises at least two main bearing supports secured to the main bearing housing securements and spaced apart transversely in the nacelle. In some embodiments, the common support comprises at least two longitudinal beams supported on the main bearing supports and the gearbox pillow blocks. In some embodiments, the common support comprises at least two longitudinally spaced apart transverse beams secured to and connecting the longitudinal beams. In some embodiments, the common support comprises at least two support bases for supporting the lifting appliances, each of the two support bases mounted on at least one of the longitudinal beams or at least one of the transverse beams.

In some embodiments, the common support comprises a first pair of vertically oriented pillow block bridges secured to the gearbox pillow blocks and spaced apart transversely in the nacelle. In some embodiments, the common support comprises a first transverse beam secured to and connecting the first pair of the transversely spaced apart pillow block bridges. In some embodiments, the common support comprises at least one first support base for supporting at least one of the lifting appliances, the at least one first support base mounted on the first transverse beam. In some embodiments, the common support comprises a second pair of vertically oriented pillow block bridges secured to the gearbox pillow blocks and spaced apart transversely in the nacelle. In some embodiments, the common support comprises a second transverse beam secured to and connecting the second pair of the transversely spaced apart pillow block bridges. In some embodiments, the common support comprises at least one second support base for supporting at least one of the lifting appliances, the at least one second support base mounted on the second transverse beam. In some embodiments, the common support comprises at least two support pillars connected to the first or second transverse beam, the support pillars mounted in the yaw drive pockets.

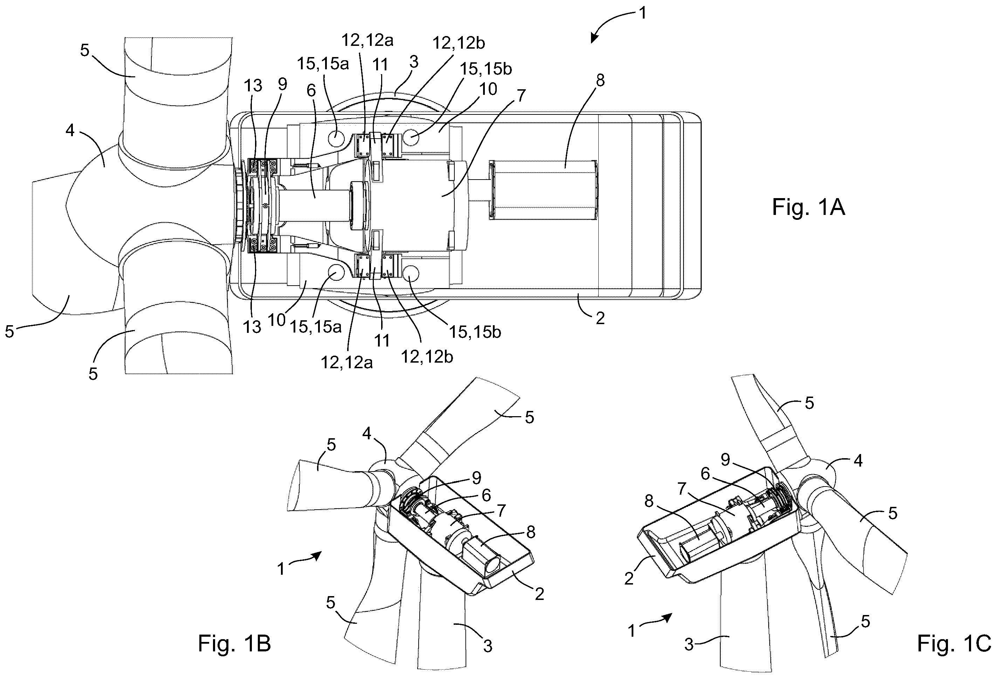

Fig. 1A to Fig. 1D illustrate a wind turbine **1** comprising a nacelle **2** (shown without a nacelle lid in place) rotationally mounted atop a tower **3.** A rotor **4,** having rotor blades **5,** is mounted on a main drive shaft **6** at a front of the nacelle **2.** The main drive shaft **6** extends longitudinally through the front of the nacelle **2** and operatively connects the rotor **4** to a gearbox **7** in the nacelle **2,** the gearbox **7** operatively connected to a generator **8** also in the nacelle **2** and situated to the rear of the gearbox **7.** The generator **8** is housed within a generator housing. At the front of and in the nacelle **2,** the main drive shaft **6** is rotationally supported by a main bearing **9.** Electrical power created by the generator **8** from operation of the wind turbine **1** may be transmitted through electrical cables to users remote from the wind turbine **1.**

Inside the nacelle **2,** the main bearing **9** and the gearbox **7** are supported on a bedplate **10.** Torque arms **11** connected to the gearbox **7** and the bedplate **10** at the right and left sides of the gearbox **7** stabilize the gearbox **7** against twisting forces. The torque arms **11** are reinforced by gearbox pillow blocks **12** attached to the bedplate **10** in front of and behind the torque arms **11.** The gearbox pillow blocks **12** comprise forward gearbox pillow blocks **12a** and rearward gearbox pillow blocks **12b.** The main bearing **9** is housed in a main bearing housing secured to the bedplate **10** by main bearing housing securements **13** at the right and left sides of the main bearing **9.** The bedplate **10** further comprises lifting lugs **14** attached to the right and left sides of the bedplate **10.** The nacelle **2** is rotatable atop the tower **3** by virtue of yaw drives (not shown) seated in yaw drive pockets **15** in the bedplate **10.** The yaw drive pockets **15** comprise forward yaw drive pockets **15a** and rearward yaw drive pockets **15b.**

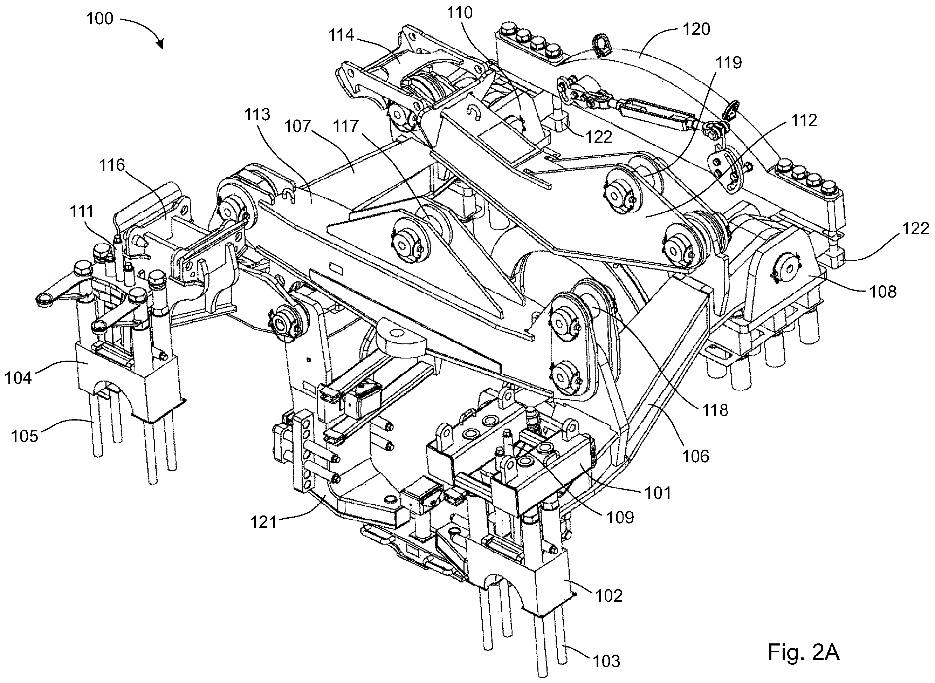

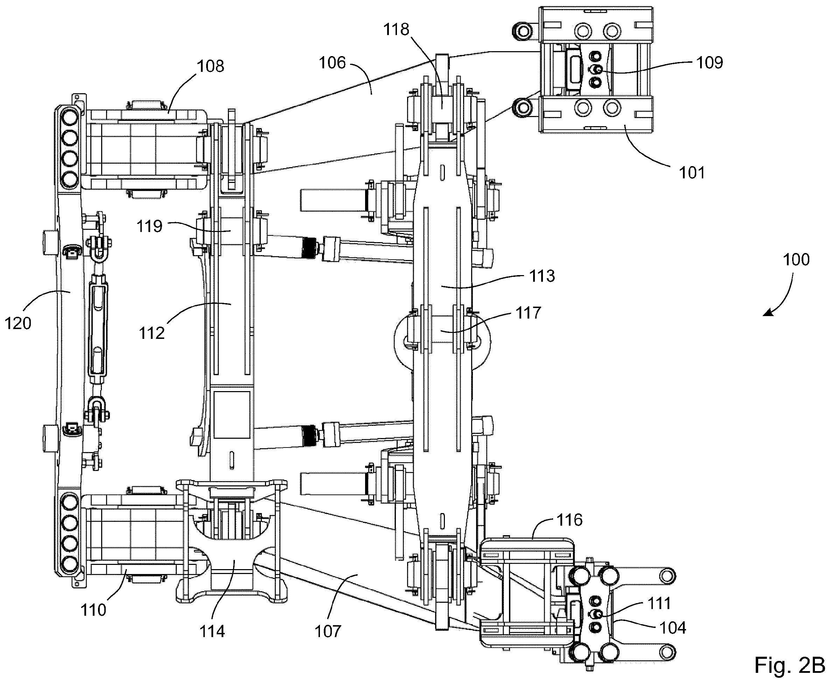

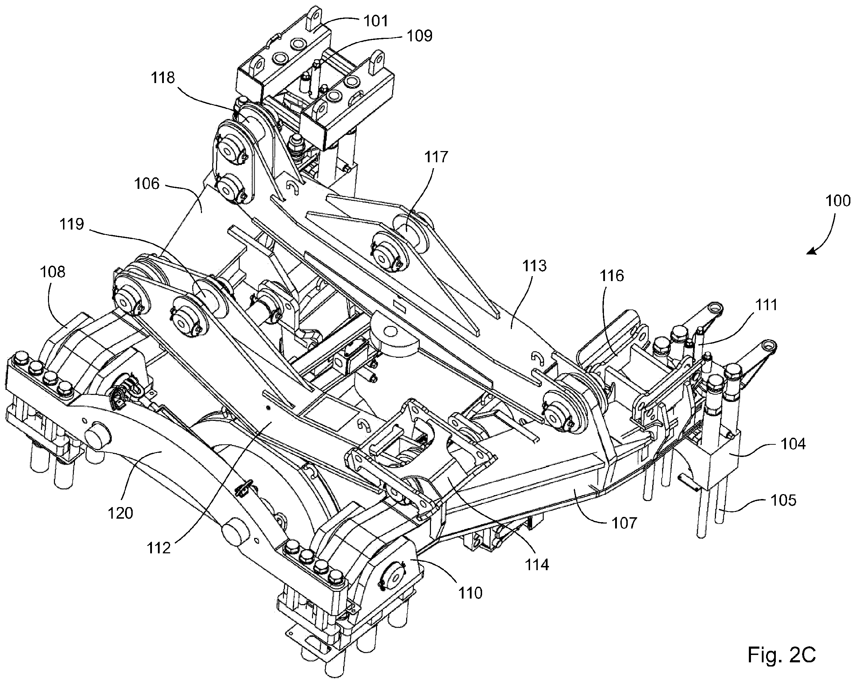

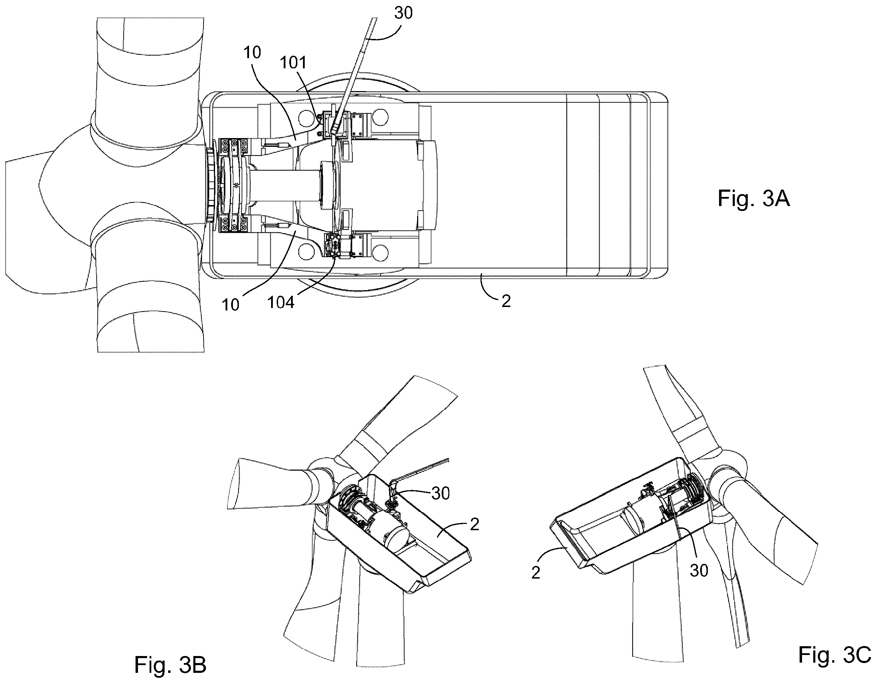

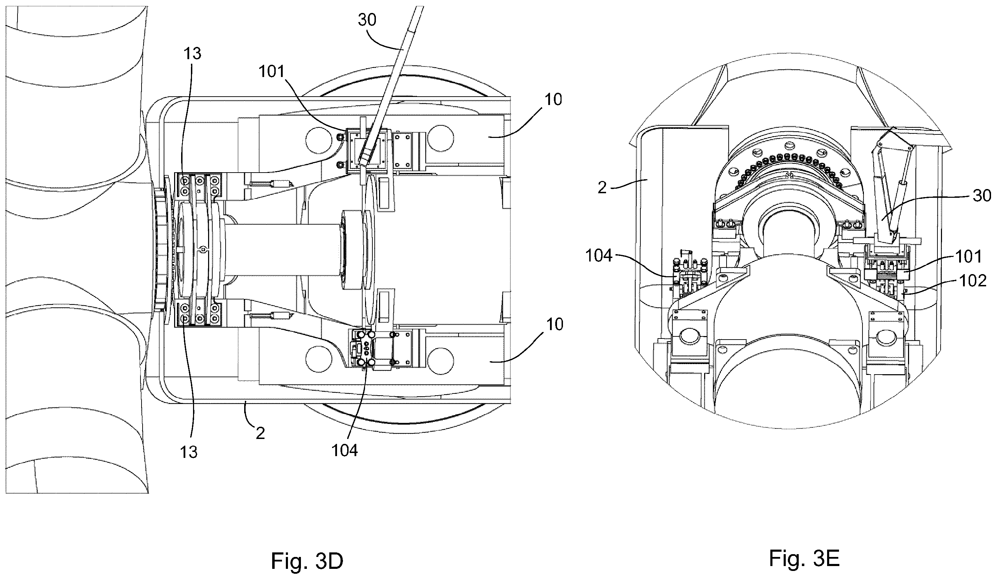

With reference to Fig. 2A to Fig. 8E, to be able to install multiple lifting appliances in the nacelle **2,** a lifting appliance support base **100** is mounted in the nacelle **2.** The lifting appliance support base **100** comprises a plurality of parts that are installed in a particular order along with various lifting appliances including a light-duty service crane **30,** a medium-duty knuckle-boom crane **40** and a heavy-duty jib crane **50.** Fig. 2A to Fig. 2C illustrate the parts of the lifting appliance support base **100,** while Fig. 3A to Fig. 8E illustrate the order in which the parts of the lifting appliance support base **100** and the various lifting appliances are mounted in the nacelle **2** to assemble a single multiple-appliance lift system **80.**

With specific reference to Fig. 2A to Fig. 2C, the lifting appliance support base **100** comprises a light-duty crane base **101,** which supports the light-duty crane **30.** The light-duty crane base **101** is attached to and supported on a first pillow block bridge **102,** which is capable of being bolted to a lower portion of one of the gearbox pillow blocks (e.g. the gearbox pillow block forward of the torque arm on one side of the gearbox) by first pillow block studs **103** (only one labeled). An upper portion of the gearbox pillow block can be removed to be able to bolt the light-duty crane base to the lower portion of the gearbox pillow block. A second pillow block bridge **104,** located on the opposite side of the nacelle from the first pillow block bridge **102,** is likewise capable of being bolted to a lower portion of another of the gearbox pillow blocks (e.g. the gearbox pillow block forward of the torque arm on the other side of the gearbox) by second pillow block studs **105** (only one labeled).

The lifting appliance support base **100** further comprises a first longitudinal beam **106** and a second longitudinal beam **107,** the first longitudinal beam **106** extending between the main bearing housing securement at one side of the main bearing and the forward gearbox pillow block on the same of nacelle as the main bearing housing securement. At the main bearing housing securement, the first longitudinal beam **106** is pinned in a first main bearing support **108,** the first main bearing support **108** capable of being bolted to the main bearing housing securement on that side of the nacelle. At the forward gearbox pillow block, the first longitudinal beam **106** rests on the lower portion of the forward gearbox pillow block between the first pillow block studs **103,** and first all-threaded pins **109** (only one labeled) threaded through the first pillow block bridge **102** serve to clamp a rearward end of the first longitudinal beam **106** to the gearbox pillow block. Likewise, the second longitudinal beam **107** is pinned in a second main bearing support **110** at the main bearing housing securement on the other side of the main bearing, the second main bearing support **110** capable of being bolted to the main bearing housing securement on the other side of the nacelle. At the forward gearbox pillow block on the other side of the nacelle, the second longitudinal beam **107** rests on the lower portion of the forward gearbox pillow block between the second pillow block studs **105,** and second all-threaded pins **111** (only one labeled) threaded through the second pillow block bridge **104** serve to clamp a rearward end of the second longitudinal beam **107** to the gearbox pillow block on which the second longitudinal beam **107** rests.

Because the longitudinal beams are supported on the main bearing housing securements and the gearbox pillow blocks, and all of the lifting appliances except the light-duty service crane are supported on the longitudinal beams, all of the lifting appliances except the light-duty service crane share both the main bearing housing securements and the gearbox pillow blocks as mounting structures in the nacelle. The light-duty service crane shares a gearbox pillow block with the other lifting appliances.

The lifting appliance support base **100** further comprises a front transverse beam **112** and a rear transverse beam **113.** The front transverse beam **112** rests on top of and straddles the first and second longitudinal beams **106, 107,** respectively, at a location to the rear of the first and second main bearing supports **108, 110,** respectively. The rear transverse beam **113** rests on top of and straddles the first and second longitudinal beams **106, 107,** respectively, at a location forward of the first and second pillow block bridges **102, 104,** respectively. A hydraulic power unit mount **114** to permit mounting of a hydraulic power unit to operate the lifting appliances is mounted on the second longitudinal beam **107** forward of the front transverse beam **112** and over the second main bearing support **110.** The hydraulic power unit mount could be mounted on the first longitudinal beam **106,** if desired.

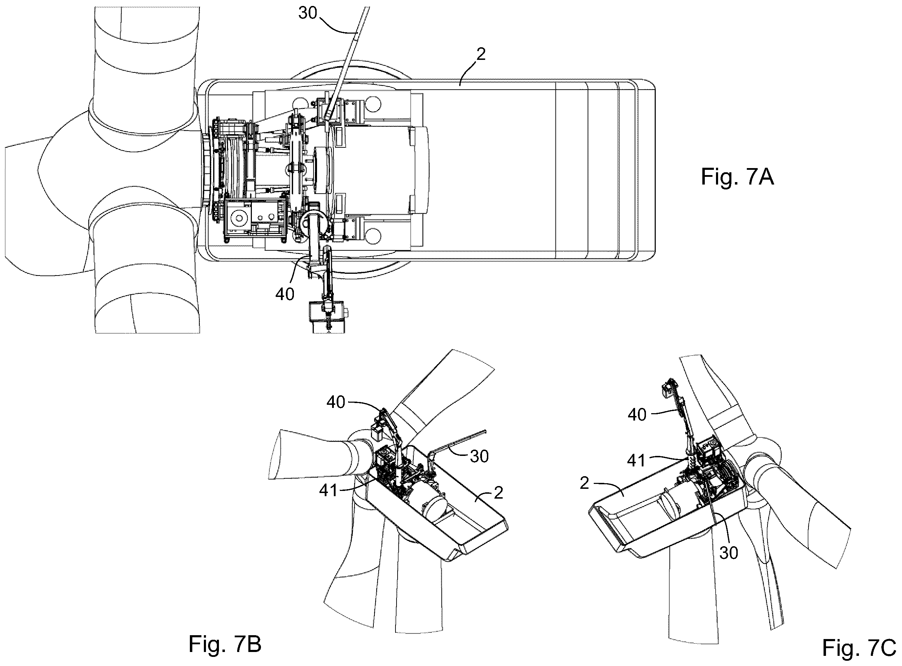

The lifting appliance support base **100** further comprises a medium-duty crane base **116,** which supports the medium-duty knuckle-boom crane **40.** The medium-duty crane base **116** is mounted on the second longitudinal beam **107** forward of the second pillow block bridge **104** and rearward of the rear transverse beam **113.** The medium-duty crane base **116** comprises a 4-pin connection for connecting a pedestal **41** (see Fig. 7B and Fig. 7C) of the medium-duty knuckle-boom crane **40** to the medium-duty crane base **116.** The lifting appliance support base **100** further comprises first, second and third pinned connections **117, 118, 119,** respectively, for mounting the heavy-duty jib crane **50** on the lifting appliance support base **100.** The pinned connections **117, 118, 119** all comprise flanges with two spaced apart plates with aligned apertures for accepting pins therethrough, the pins passing through corresponding apertures in corresponding flanges on the heavy-duty jib crane**.50.** Finally, the lifting appliance support base **100** further comprises a rotor lock **120** and a main shaft clamp **121** for preventing rotational and translational movement of the main shaft during an installation or repair procedure of a wind turbine component.

While the parts of the lifting appliance support base **100** are described above with reference to Fig. 2A to Fig. 2C, assembly of the appliance support base parts and mounting of the various lifting appliances occur in an order that permits the lifting of heavier and heavier objects as the lift system **80** is assembled in the nacelle **2** atop the wind turbine **1.**

With reference to Fig. 3A to 3E, first and second pillow block bridges **102, 104** are first to be installed, which is accomplished by removing the top portions of the forward gearbox pillow blocks **12a** and bolting the pillow block bridges **102, 104** to the lower portions of the forward gearbox pillow blocks **12a.** The light-duty crane base **101** is then attached atop the first pillow block bridge **102,** and the light-duty service crane **30** is mounted on the light-duty crane base **101.**

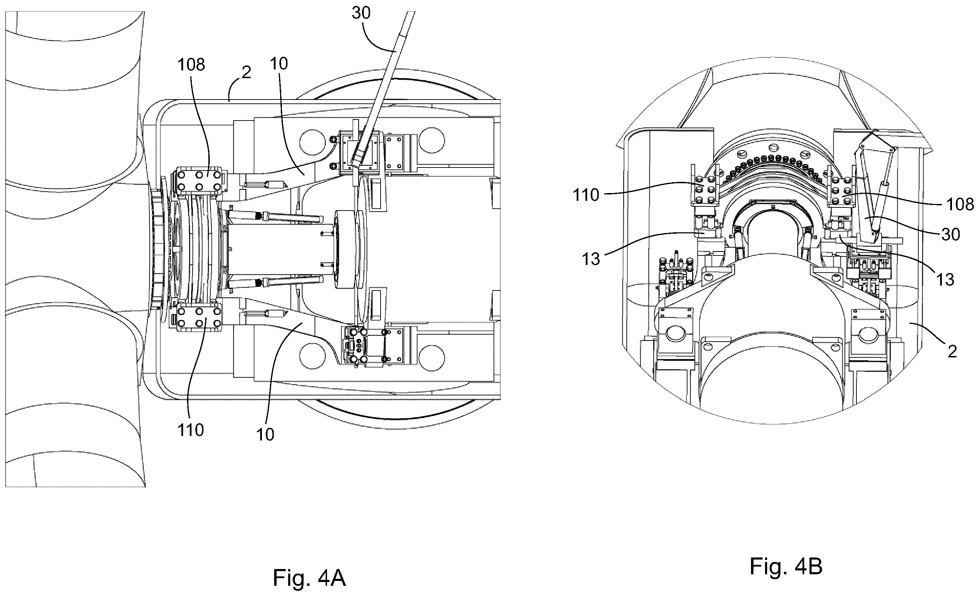

With reference to Fig. 4A to Fig. 4B, the next step is to use the light-duty service crane **30** to raise the first and second main bearing supports **108, 110,** respectively, up to the nacelle **2,** where the first and second main bearing supports **108, 110** are bolted to the main bearing housing securements **13.**

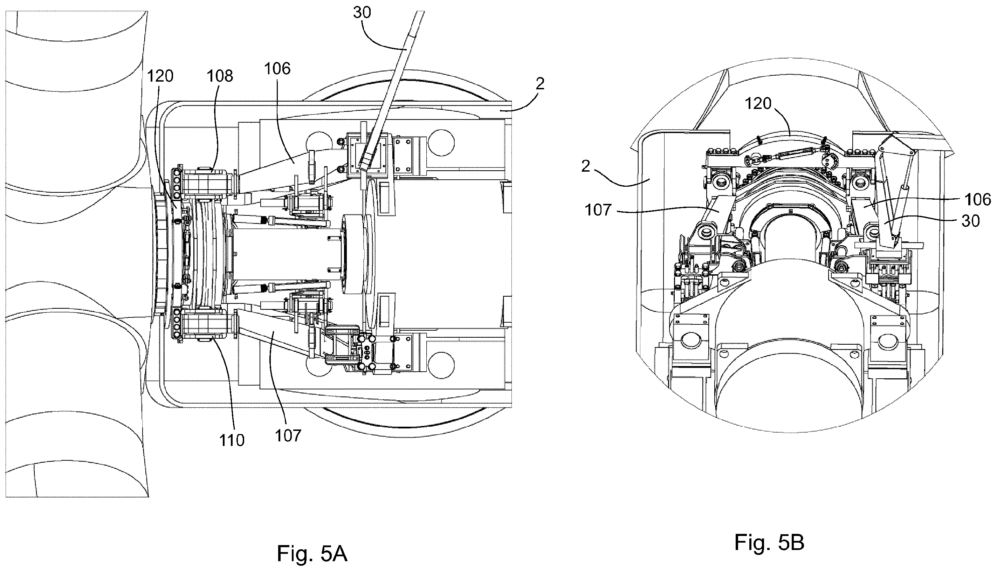

With reference to Fig. 5A to Fig. 5B, the next step is to use the light-duty service crane **30** to raise the first and second longitudinal beams **106, 107,** respectively, the main shaft clamp **121** and the rotor lock **120** up to the nacelle **2,** where the longitudinal beams **106, 107** are set on the first and second main bearing supports **108, 110** and on the lower portions of the forward gearbox pillow blocks **12a.** The longitudinal beams **106, 107** are secured by pinning to the first and second main bearing supports **108, 110** and clamping to the forward gearbox pillow blocks **12a.** The rotor lock **120** is mounted at the front ends of the longitudinal beams **106, 107** using clamps **122,** and the main shaft clamp **121** is mounted proximate rear ends of the longitudinal beams **106, 107** using pinned connections.

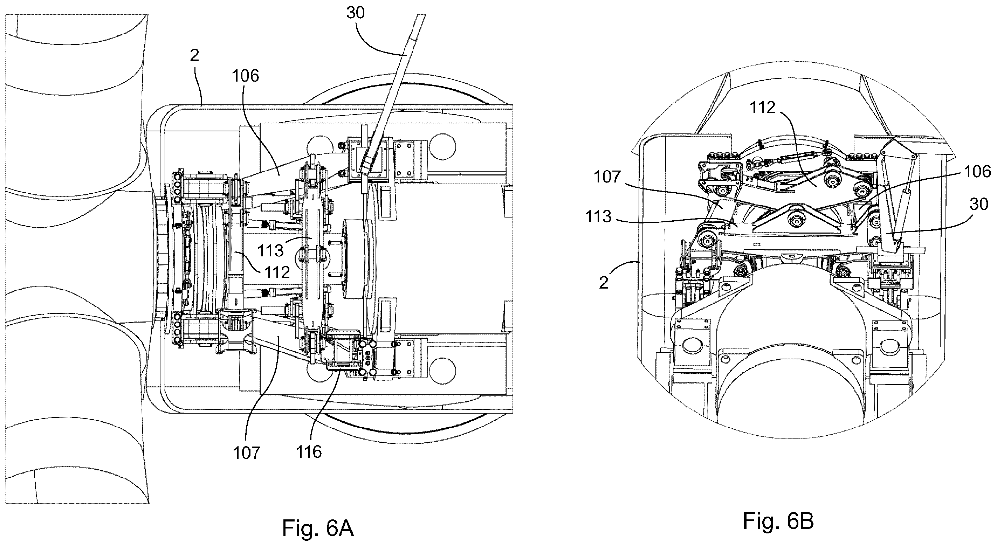

With reference to Fig. 6A to Fig. 6B, the next step is to use the light-duty service crane **30** to raise the front and rear transverse beams **112, 113,** respectively, up to the nacelle **2,** where the transverse beams **112, 113** are installed transversely across the longitudinal beams **106, 107.** The transverse beams **112, 113** may be secured to the longitudinal beams **106, 107,** if desired.

With reference to Fig. 7A to Fig. 7B, the next step is to use the light-duty service crane **30** to raise parts of the medium-duty knuckle-boom crane **40** up to the nacelle **2.** The pedestal **41** is raised first and secured to the medium-duty crane base **116** by the 4-pin connection. Then, the knuckle-boom is raised by the light-duty service crane **30** and secured to the pedestal **41** by pinned connections. The light-duty service crane **30** is also used to hold and stabilize the parts of the medium-duty knuckle-boom crane **40** while the medium-duty knuckle-boom crane **40** is being mounted.

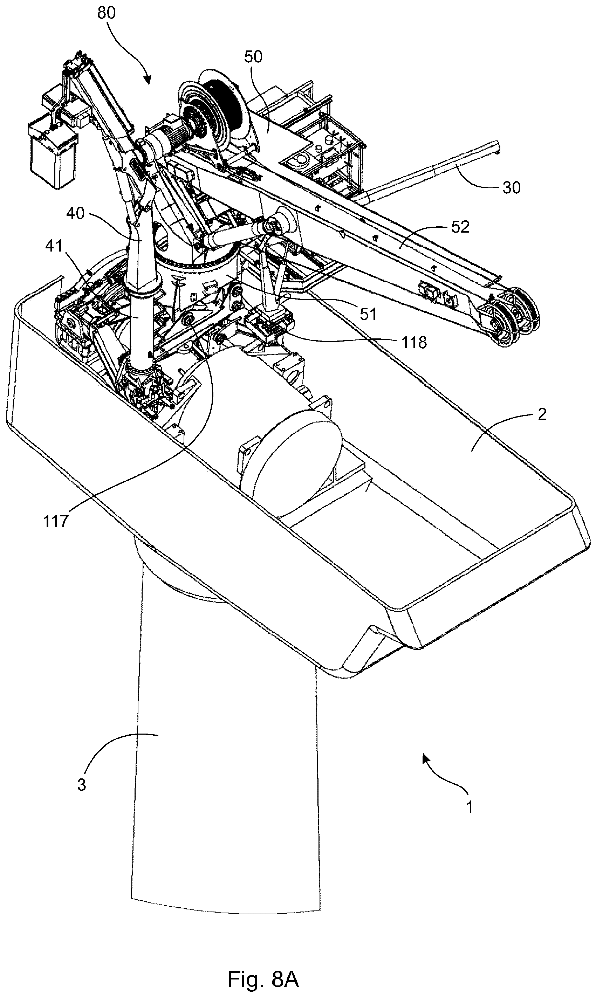

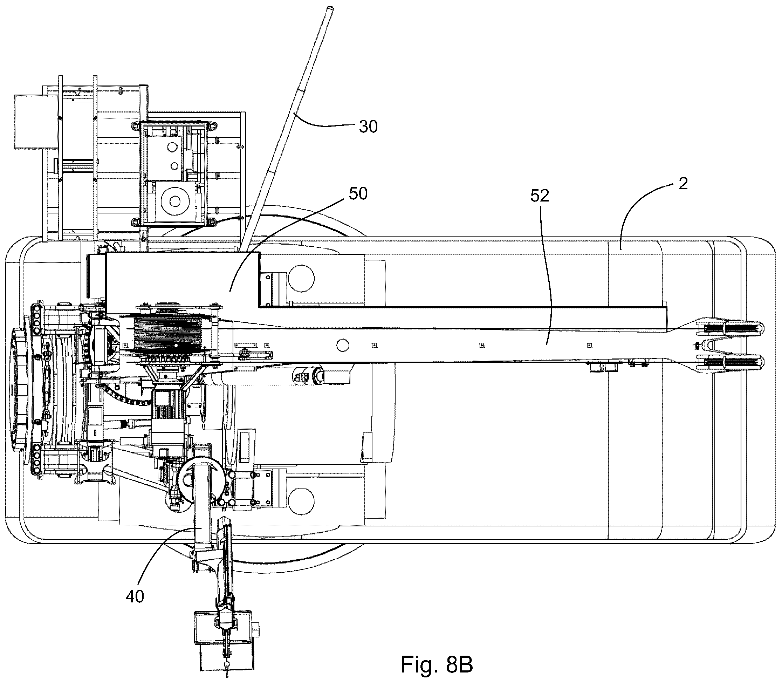

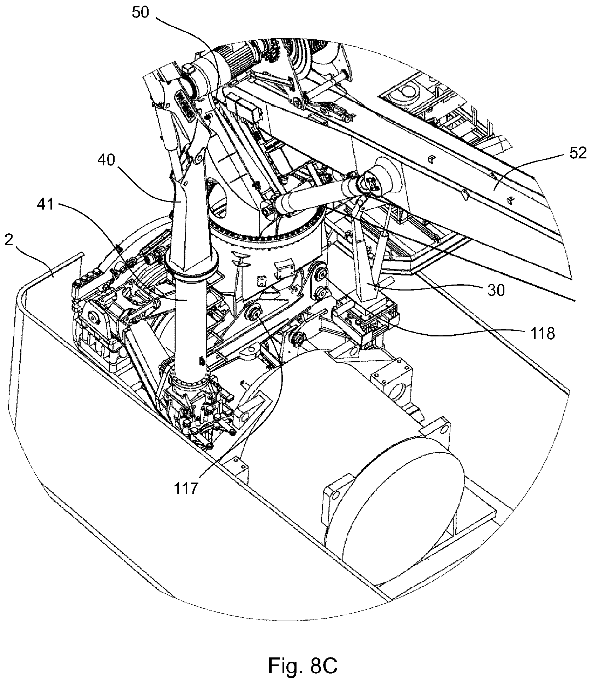

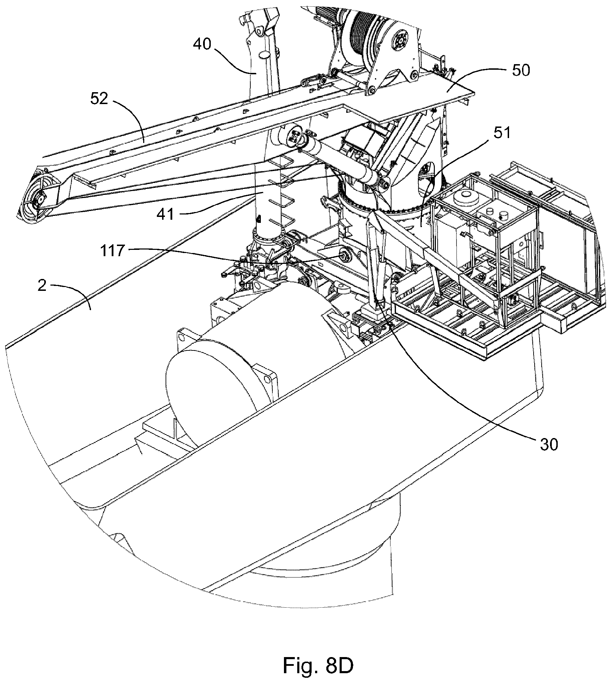

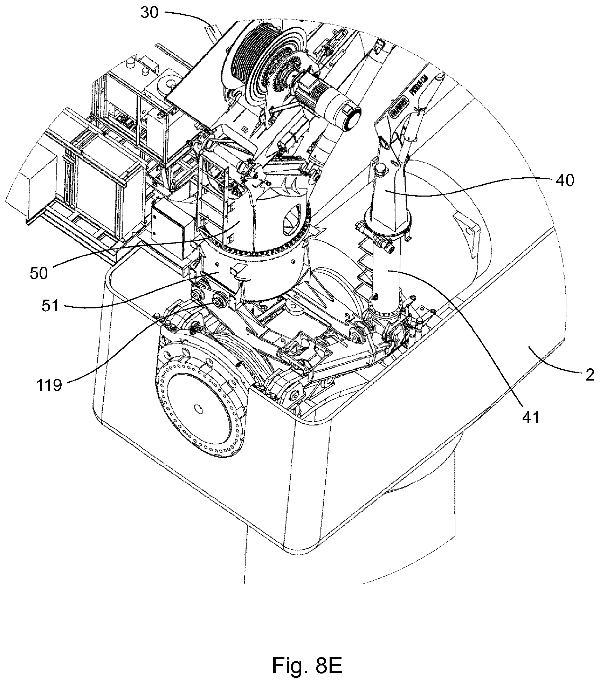

With reference to Fig. 8A to Fig. 8E, the next step is to use the medium-duty knuckle-boom crane **40** to raise up the parts of the heavy-duty jib crane **50** to the nacelle **2,** and to hold and stabilize the parts during installation. A jib crane base **51** is raised first and secured to the first and second transverse beams **112, 113,** respectively, by pins at the pinned connections **117, 118, 119.** A jib **52** of the heavy-duty jib crane **50** is then raised up and secured to the jib crane base **51** by pinned connections. Assembling the heavy-duty jib crane **50** completes the multiple-appliance lift system **80** mounted in the nacelle **2** of the wind turbine **1.**

The lift system **80** has three lifting appliances (i.e. the light-duty service crane **30,** the medium-duty knuckle-boom crane **40** and the heavy-duty jib crane **50**) that share the forward gearbox pillow blocks **12a** as mounting points in the nacelle **2.** The lift system **80** has two lifting appliances (i.e. the medium-duty knuckle-boom crane **40** and the heavy-duty jib crane **50**) that share both the main bearing housing securements **13** and the forward gearbox pillow blocks **12a** as mounting points in the nacelle **2.** Sharing of the main bearing housing securements **13** and the forward gearbox pillow blocks **12a** as mounting points is accomplished through the use of the lifting appliance support base **100,** which is supported on the main bearing housing securements **13** and the forward gearbox pillow blocks **12a,** the lifting appliance support base **100** in turn supporting both the medium-duty knuckle-boom crane **40** and the heavy-duty jib crane **50.**

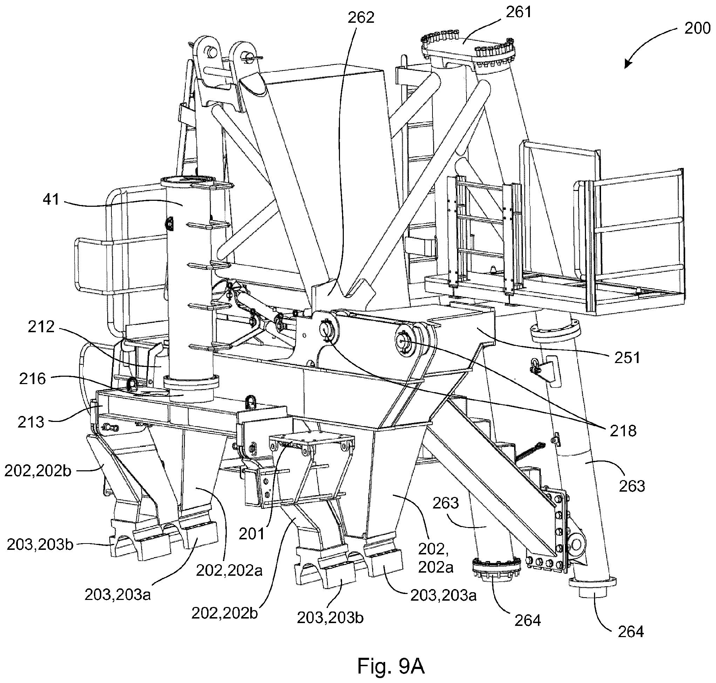

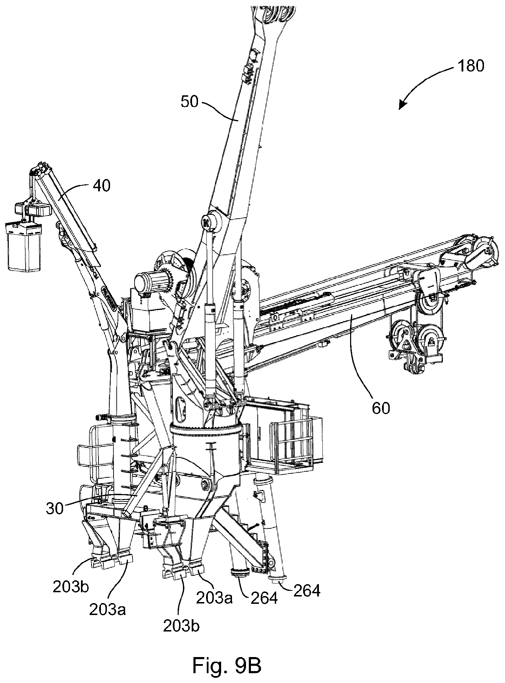

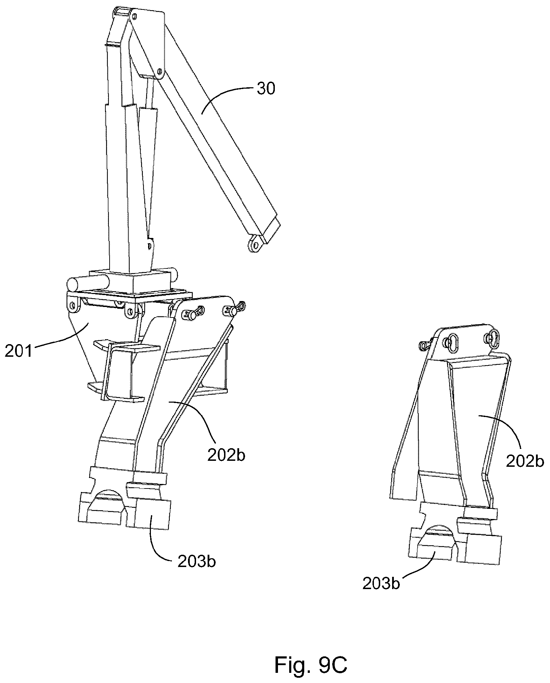

Fig. 9A to Fig. 9F illustrate an alternative multiple-appliance lift system **180** mountable in the nacelle **2** of the wind turbine **1,** the system **180** comprising four lifting appliances, namely the light-duty service crane **30,** the medium-duty knuckle-boom crane **40,** the heavy-duty jib crane **50** and a super heavy-duty boom hoist **60,** as shown in Fig. 9B. To be able to install the multiple lifting appliances in the nacelle **2,** an alternative embodiment of a lifting appliance support base **200** is mounted in the nacelle **2.** The lifting appliance support base **200** comprises a plurality of parts that are installed in a particular order along with the various lifting appliances. Fig. 9A illustrates the parts of the lifting appliance support base **200,** while Fig. 9C to Fig. 9F illustrate the order in which the parts of the lifting appliance support base **200** and the various lifting appliances are mounted in the nacelle **2** to assemble a single multiple-appliance lift system **180.**

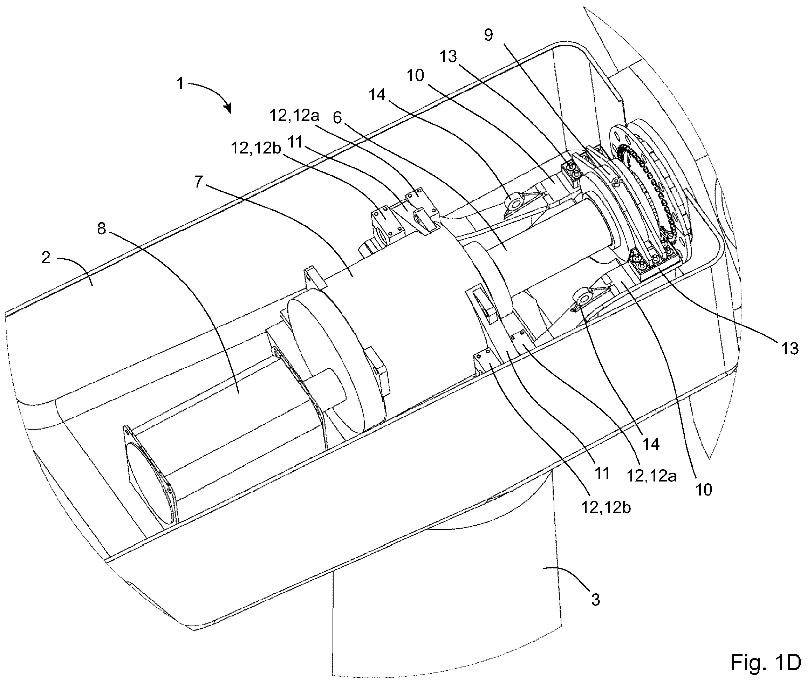

With reference to Fig. 9A, the lifting appliance support base **200** is designed to be supported in the nacelle **2** in the forward yaw drive pockets **15a** in the bedplate **10,** and on both the forward gearbox pillow blocks **12a** and the rearward gearbox pillow blocks **12b** (see Fig. 1A and Fig. 1D).

The lifting appliance support base **200** comprises four vertically oriented pillow block bridges **202** comprising two forward pillow block bridges **202a** and two rearward pillow block bridges **202b.** The pillow block bridges **202** each comprise a bridge foot **203** at the bottom end of each of the pillow block bridges **202** for bolted connection to lower portions of the gearbox pillow blocks **12.** The forward pillow block bridges **202a** comprise forward bridge feet **203a** and the rearward pillow block bridges **202b** comprise rearward bridge feet **203b.** Mounted on one of the rearward pillow block bridges **202b** is a light-duty crane base **201** on which the light-duty service crane **30** can be mounted. A rear transverse beam **213** extends transversely between and is connected to upper portions of the two rearward pillow block bridges **202b.** A medium-duty crane base **216** is fixedly supported on the rear transverse beam **213,** the medium-duty crane base **216** providing a mount for the pedestal **41** of the medium-duty knuckle-boom crane **40.** A forward transverse beam **212** extends transversely between and is connected to upper portions of the two forward pillow block bridges **202a.** Fixedly mounted at one end of the forward transverse beam **212** is a heavy-duty crane base **251** to which the heavy-duty jib crane **50** can be mounted. The heavy-duty crane base **251** is provided with pinned connections **218** (only two labeled) to secure the heavy-duty jib crane **50** to the heavy-duty crane base **251.** Also fixedly mounted on the forward transverse beam **212** is a frame structure **262** of a super heavy-duty crane base **261,** the super heavy-duty crane base **261** providing a mount for the super heavy-duty boom hoist **60.** The super heavy-duty crane base **261** also comprises two vertically oriented support pillars **263** to which the frame structure **262** is connected. The support pillars **263** comprise yaw drive pocket inserts **264** at the bottom ends support pillars **263** for insertion in to the forward yaw drive pockets **15a** in the bedplate **10** of the nacelle **2.**

The lifting appliance support base **200** thereby supports the light-duty service crane **30,** the medium-duty knuckle-boom crane **40** and the heavy-duty jib crane **50** on the gearbox pillow blocks **12,** while supporting and the super heavy-duty boom hoist **60** on both the gearbox pillow blocks **12** and in the yaw drive pockets **15.**

While the parts of the lifting appliance support base **200** and the lift system **180** are described above with reference to Fig. 9A and Fig. 9B, assembly of the appliance support base parts and mounting of the various lifting appliances occur in an order that permits the lifting of heavier and heavier objects as the lift system **180** is assembled in the nacelle **2** atop the wind turbine **1.**

With reference to Fig. 9C, the rear pillow block bridges **202b** are first to be installed, which is accomplished by removing the top portions of the rearward gearbox pillow blocks **12b** and bolting the rear pillow block bridges **202b** to the lower portions of the rearward gearbox pillow blocks **12b.** The light-duty crane base **201** is then attached atop one of the pillow block bridge **202b,** and the light-duty service crane **30** is mounted on the light-duty crane base **201.** An existing nacelle-mounted service crane in the wind turbine may be utilized to lift the rear pillow block bridges **202b,** the light-duty crane base **201** and the light-duty service crane **30** up to the nacelle.

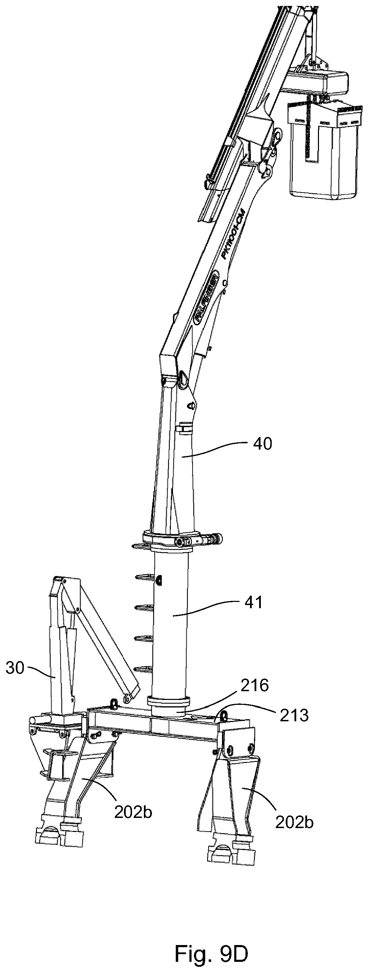

With reference to Fig. 9D, the rear transverse beam **213** having the medium-duty crane base **216** fixed thereon is then lifted up to the nacelle by the light-duty service crane **30** and installed between the rear pillow block bridges **202b.** The light-duty service crane **30** is then used to lift the pedestal **41** of the medium-duty knuckle-boom crane **40,** which is installed on the medium-duty crane base **216.** The light-duty service crane **30** is then used to lift the remaining parts of the medium-duty knuckle-boom crane **40,** which is installed on the pedestal **41.** The light-duty service crane **30** can be used to hold and stabilize objects as required.

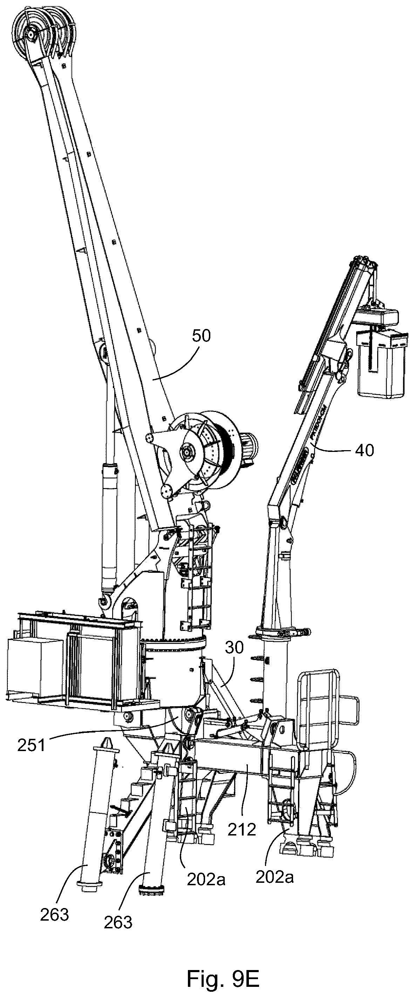

With reference to Fig. 9E, the medium-duty knuckle-boom crane **40** is then used to lift up the forward pillow block bridges **202a,** which are installed on the forward gearbox pillow blocks **12a,** and then the medium-duty knuckle-boom crane **40** is also used to lift up the forward transverse beam **212** with the heavy-duty crane base **251** thereon, the forward transverse beam **212** then being mounted between the forward pillow block bridges **202a.** The medium-duty knuckle-boom crane **40** is then used to lift up the support pillars **263,** which are mounted in the forward yaw drive pockets **15a.** The medium-duty knuckle-boom crane **40** is then used to lift up the parts of the heavy-duty jib crane **50,** which is mounted on the heavy-duty crane base **251.** Both the light-duty service crane **30** and the medium-duty knuckle-boom crane **40** can be used to hold and stabilize objects as required.

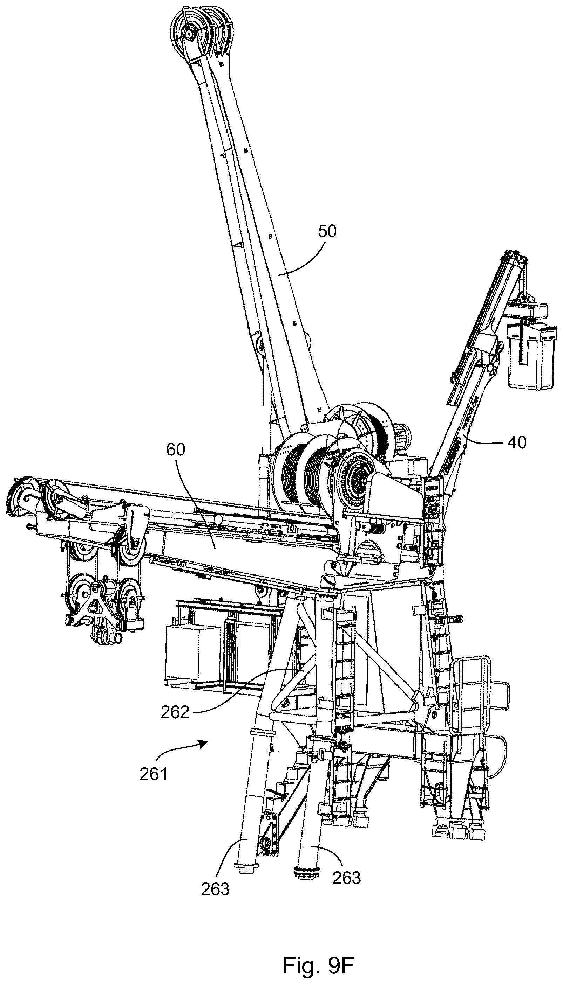

With reference to Fig. 9F, the heavy-duty jib crane **50** is then used to lift up the remaining parts of the lifting appliance support base **200,** including the frame structure **262,** as well as the super heavy-duty boom hoist **60.** The frame structure **262** is assembled to complete the super heavy-duty crane base **261,** and then the super heavy-duty boom hoist **60** is mounted on the super heavy-duty crane base **261.** The light-duty service crane **30,** medium-duty knuckle-boom crane **40** and heavy-duty jib crane **50** can be used to hold and stabilize objects as required.

The lift system **180** has four lifting appliances (i.e. the light-duty service crane **30,** the medium-duty knuckle-boom crane **40,** the heavy-duty jib crane **50** and the super heavy-duty boom hoist **60**) that share the gearbox pillow blocks **12** as mounting points in the nacelle **2.** The lift system **180** has two lifting appliances (i.e. heavy-duty jib crane **50** and the super heavy-duty boom hoist **60**) that share the forward gearbox pillow blocks **12a** as mounting points in the nacelle **2.** The super heavy-duty boom hoist **60** is also supported in the nacelle **2** in the forward yaw drive pockets **15a.**

Sharing of gearbox pillow blocks **12** as mounting points is accomplished through the use of the lifting appliance support base **200,** which is supported on the forward gearbox pillow blocks **12a,** on the rearward gearbox pillow blocks **12b** and in the forward yaw drive pockets **15a.**

Both the lift system **80** and the alternative lift system **180** may be disassembled by reversing the order of steps.

The novel features will become apparent to those of skill in the art upon examination of the description. It should be understood, however, that the scope of the claims should not be limited by the embodiments, but should be given the broadest interpretation consistent with the wording of the claims and the specification as a whole.

## Claims

1. A method of assembling a nacelle-mounted multiple-appliance lift system (80) to a nacelle (2) of a wind turbine (1), the method comprising:
mounting a portion of a common support (200) for lifting appliances to the nacelle (2) of the wind turbine (1);
mounting a first lifting appliance on the portion of the common support (200);
assembling the common support (200) to the nacelle (2), the assembled common support comprising:
at least two pillow block bridges (202) secured to at least two of a plurality of gearbox pillow blocks (12a, 12b) and spaced apart transversely in the nacelle (2); and,
longitudinal and transverse beams (212, 213) supported on the at least two of the plurality of gearbox pillow blocks (12a, 12b);
operating the first lifting appliance to lift a second lifting appliance into the nacelle (2);
mounting the second lifting appliance on at least a portion of the common support (200);
operating the first or second lifting appliance to lift a third lifting appliance into the nacelle (2);
mounting the third lifting appliance on the common support (200);
operating the first, second or third lifting appliance to lift a fourth lifting appliance into the nacelle (2); and,
mounting the fourth lifting appliance on the common support (200).

2. The method of claim 1, wherein the portion of the common support (200) comprises one of the at least two pillow block bridges (202).

3. The method of claim 1 or claim 2, wherein the fourth lifting appliance is heavier-duty than the third lifting appliance, the third lifting appliance is heavier-duty than the second lifting appliance, and the second lifting appliance is heavier-duty than the first lifting appliance.

4. The method of any one of claims 1 to 3, wherein the first nacelle-mountable lifting appliance is dismounted after the second nacelle-mountable lifting appliance is mounted.

5. The method of any one of claims 1 to 3, wherein the first nacelle-mountable lifting appliance is dismounted after the third nacelle-mountable lifting appliance is mounted.

6. The method of any one of claims 1 to 3, wherein the first nacelle-mountable lifting appliance is dismounted after the fourth nacelle-mountable lifting appliance is mounted.

7. The method of any one of claims 1 to 6, wherein:
the first lifting appliance is mounted proximate a first side of the nacelle (2);
the second lifting appliance is mounted proximate the first side of the nacelle (2), proximate a second side of the nacelle (2) or proximate a longitudinal centerline of the nacelle (2) between the first and second sides of the nacelle (2);
the third lifting appliance is mounted proximate the first side of the nacelle (2), proximate the second side of the nacelle (2) or proximate a longitudinal centerline of the nacelle (2) between the first and second sides of the nacelle (2); and,
the fourth lifting appliance is mounted proximate the first side of the nacelle (2), proximate the second side (2) of the nacelle or proximate a longitudinal centerline of the nacelle (2) between the first and second sides of the nacelle (2).

8. The method of any one of claims 1 to 6, wherein the first lifting appliance is mounted proximate a first side of the nacelle (2), the second lifting appliance is mounted proximate a second side of the nacelle (2), the third lifting appliance is mounted proximate the first or second side of the nacelle (2), and the fourth lifting appliance is mounted proximate the first side of the nacelle (2), proximate the second side of the nacelle (2) or proximate a longitudinal centerline of the nacelle (2) between the first and second sides of the nacelle (2).

9. The method of any one of claims 1 to 8, wherein at least one component of the common support (200) bears the weight of the lifting appliances.

10. The method of any one of claims 1 to 9, wherein at least three of the first, second, third and fourth lifting appliances are cranes.

11. A nacelle-mounted multiple-appliance lift system (80), the lift system (80) comprising:
a first lifting appliance mounted to a nacelle (2) of a wind turbine (1) proximate a first side of the nacelle (2);
a second lifting appliance mounted to the nacelle (2) of the wind turbine (1) proximate the first side of the nacelle (2), proximate a second side of the nacelle (2) or proximate a longitudinal centerline of the nacelle (2) between the first side and the second side of the nacelle (2);
a third lifting appliance mounted to the nacelle (2) of the wind turbine (1) proximate the first side of the nacelle (2), proximate the second side of the nacelle (2) or proximate a longitudinal centerline of the nacelle (2) between the first and second sides of the nacelle (2);
a fourth lifting appliance mounted to the nacelle (2) of the wind turbine (1) proximate the first side of the nacelle (2), proximate the second side of the nacelle (2) or proximate a longitudinal centerline of the nacelle (2) between the first and second sides of the nacelle (2); and,
a common support (200) for the first, second, third and fourth lifting appliances, the wind turbine (1) comprising a plurality of gearbox pillow blocks (12a, 12b), the common support (200) mounted on at least two of the plurality of gearbox pillow blocks (12a, 12b), **characterized in that** the common support (200) comprises:
at least two pillow block bridges (202) secured to the at least two of the plurality of gearbox pillow blocks (12a, 12b) and spaced apart transversely in the nacelle (2); and,
longitudinal beams (106, 107) and transverse beams (212, 213) supported on the at least two of the plurality of gearbox pillow blocks (12a, 12b).

12. The lift system (80) of claim 11, wherein the first lifting appliance is mounted proximate a first side of the nacelle (2), the second lifting appliance is mounted proximate a second side of the nacelle (2), the third lifting appliance is mounted proximate the first or second side of the nacelle (2), and the fourth lifting appliance is mounted proximate the first side of the nacelle (2), proximate the second side of the nacelle (2) or proximate a longitudinal centerline of the nacelle (2) between the first and second sides of the nacelle (2).

13. The lift system (80) of claim 11 or claim 12, wherein the fourth lifting appliance is heavier-duty than the third lifting appliance, the third lifting appliance is heavier-duty than the second lifting appliance, and the second lifting appliance is heavier-duty than the first lifting appliance.

14. The lift system (80) of any one of claims 11 to 13, wherein the common support (200) is also mounted on at least two main bearing housing securements (13) or is also mounted on at least two yaw drive pockets (15).

15. The lift system (80) of any one of claims 11 to 14, wherein the common support (200) further comprises at least two support bases for supporting the at least two of the lifting appliances, each of the at least two support bases mounted on at least one of the longitudinal beams (106, 107) or at least one of the transverse beams (212, 213).

## Patentansprüche

1. Verfahren zum Zusammenbauen eines gondelmontierten Hubsystems (80) mit mehreren Vorrichtungen an einer Gondel (2) einer Windturbine (1), wobei das Verfahren Folgendes umfasst:
Montieren eines Abschnitts einer gemeinsamen Stütze (200) für Hubvorrichtungen an der Gondel (2) der Windturbine (1);
Montieren einer ersten Hubvorrichtung an dem Abschnitt der gemeinsamen Stütze (200);
Zusammenbauen der gemeinsamen Stütze (200) mit der Gondel (2), wobei die zusammengebaute gemeinsame Stütze Folgendes umfasst:
mindestens zwei Lagerbockbrücken (202), die an mindestens zwei einer Vielzahl von Getriebelagerböcken (12a, 12b) gesichert und quer in der Gondel (2) voneinander beabstandet sind; und
Längs- und Querträger (212, 213), die auf den mindestens zwei der Vielzahl von Getriebelagerböcken (12a, 12b) gestützt sind;
Betreiben der ersten Hubvorrichtung, um eine zweite Hubvorrichtung in die Gondel (2) zu heben;
Montieren der zweiten Hubvorrichtung an mindestens einem Abschnitt der gemeinsamen Stütze (200);
Betreiben der ersten oder zweiten Hubvorrichtung, um eine dritte Hubvorrichtung in die Gondel (2) zu heben;
Montieren der dritten Hubvorrichtung an der gemeinsamen Stütze (200);
Betreiben der ersten, zweiten oder dritten Hubvorrichtung, um eine vierte Hubvorrichtung in die Gondel (2) zu heben; und
Montieren der vierten Hubvorrichtung an der gemeinsamen Stütze (200).

2. Verfahren nach Anspruch 1, wobei der Abschnitt der gemeinsamen Stütze (200) eine der mindestens zwei Lagerbockbrücken (202) umfasst.

3. Verfahren nach Anspruch 1 oder Anspruch 2, wobei die vierte Hubvorrichtung stärker belastbar als die dritte Hubvorrichtung ist, die dritte Hubvorrichtung stärker belastbar als die zweite Hubvorrichtung ist und die zweite Hubvorrichtung stärker belastbar als die erste Hubvorrichtung ist.

4. Verfahren nach einem der Ansprüche 1 bis 3, wobei die erste gondelmontierbare Hubvorrichtung demontiert wird, nachdem die zweite gondelmontierbare Hubvorrichtung montiert ist.

5. Verfahren nach einem der Ansprüche 1 bis 3, wobei die erste gondelmontierbare Hubvorrichtung demontiert wird, nachdem die dritte gondelmontierbare Hubvorrichtung montiert ist.

6. Verfahren nach einem der Ansprüche 1 bis 3, wobei die erste gondelmontierbare Hubvorrichtung demontiert wird, nachdem die vierte gondelmontierbare Hubvorrichtung montiert ist.

7. Verfahren nach einem der Ansprüche 1 bis 6, wobei:
die erste Hubvorrichtung nahe einer ersten Seite der Gondel (2) montiert wird;
die zweite Hubvorrichtung nahe der ersten Seite der Gondel (2), nahe einer zweiten Seite der Gondel (2) oder nahe einer Längsmittellinie der Gondel (2) zwischen der ersten und zweiten Seite der Gondel (2) montiert wird;
die dritte Hubvorrichtung nahe der ersten Seite der Gondel (2), nahe der zweiten Seite der Gondel (2) oder nahe einer Längsmittellinie der Gondel (2) zwischen der ersten und zweiten Seite der Gondel (2) montiert wird; und
die vierte Hubvorrichtung nahe der ersten Seite der Gondel (2), nahe der zweiten Seite (2) der Gondel oder nahe einer Längsmittellinie der Gondel (2) zwischen der ersten und zweiten Seite der Gondel (2) montiert wird.

8. Verfahren nach einem der Ansprüche 1 bis 6, wobei die erste Hubvorrichtung nahe einer ersten Seite der Gondel (2) montiert wird, die zweite Hubvorrichtung nahe einer zweiten Seite der Gondel (2) montiert wird, die dritte Hubvorrichtung nahe der ersten oder zweiten Seite der Gondel (2) montiert wird und die vierte Hubvorrichtung nahe der ersten Seite der Gondel (2), nahe der zweiten Seite der Gondel (2) oder nahe einer Längsmittellinie der Gondel (2) zwischen der ersten und zweiten Seite der Gondel (2) montiert wird.

9. Verfahren nach einem der Ansprüche 1 bis 8, wobei mindestens eine Komponente der gemeinsamen Stütze (200) das Gewicht der Hubvorrichtungen trägt.

10. Verfahren nach einem der Ansprüche 1 bis 9, wobei mindestens drei der ersten, zweiten, dritten und vierten Hubvorrichtung Krane sind.

11. Gondelmontiertes Hubsystem (80) mit mehreren Vorrichtungen, wobei das Hubsystem (80) Folgendes umfasst:
eine erste Hubvorrichtung, die an einer Gondel (2) einer Windturbine (1) nahe einer ersten Seite der Gondel (2) montiert ist;
eine zweite Hubvorrichtung, die an der Gondel (2) der Windturbine (1) nahe der ersten Seite der Gondel (2), nahe einer zweiten Seite der Gondel (2) oder nahe einer Längsmittellinie der Gondel (2) zwischen der ersten Seite und der zweiten Seite der Gondel (2) montiert ist;
eine dritte Hubvorrichtung, die an der Gondel (2) der Windturbine (1) nahe der ersten Seite der Gondel (2), nahe der zweiten Seite der Gondel (2) oder nahe einer Längsmittellinie der Gondel (2) zwischen der ersten und zweiten Seite der Gondel (2) montiert ist;
eine vierte Hubvorrichtung, die an der Gondel (2) der Windturbine (1) nahe der ersten Seite der Gondel (2), nahe der zweiten Seite der Gondel (2) oder nahe einer Längsmittellinie der Gondel (2) zwischen der ersten und zweiten Seite der Gondel (2) montiert ist; und
eine gemeinsame Stütze (200) für die erste, zweite, dritte und vierte Hubvorrichtung, wobei die Windturbine (1) eine Vielzahl von Getriebelagerböcken (12a, 12b) umfasst, wobei die gemeinsame Stütze (200) an mindestens zwei der Vielzahl von Getriebelagerböcken (12a, 12b) montiert ist,
**dadurch gekennzeichnet, dass** die gemeinsame Stütze (200) Folgendes umfasst:
mindestens zwei Lagerbockbrücken (202), die an den mindestens zwei der Vielzahl von Getriebelagerböcken (12a, 12b) gesichert und quer in der Gondel (2) voneinander beabstandet sind; und
Längsträger (106, 107) und Querträger (212, 213), die auf den mindestens zwei der Vielzahl von Getriebelagerböcken (12a, 12b) gestützt sind.

12. Hubsystem (80) nach Anspruch 11, wobei die erste Hubvorrichtung nahe einer ersten Seite der Gondel (2) montiert ist, die zweite Hubvorrichtung nahe einer zweiten Seite der Gondel (2) montiert ist, die dritte Hubvorrichtung nahe der ersten oder zweiten Seite der Gondel (2) montiert ist und die vierte Hubvorrichtung nahe der ersten Seite der Gondel (2), nahe der zweiten Seite der Gondel (2) oder nahe einer Längsmittellinie der Gondel (2) zwischen der ersten und zweiten Seite der Gondel (2) montiert ist.

13. Hubsystem (80) nach Anspruch 11 oder Anspruch 12, wobei die vierte Hubvorrichtung stärker belastbar als die dritte Hubvorrichtung ist, die dritte Hubvorrichtung stärker belastbar als die zweite Hubvorrichtung ist und die zweite Hubvorrichtung stärker belastbar als die erste Hubvorrichtung ist.

14. Hubsystem (80) nach einem der Ansprüche 11 bis 13, wobei die gemeinsame Stütze (200) auch an mindestens zwei Hauptlagergehäusesicherungen (13) montiert ist oder auch an mindestens zwei Gierantriebsaussparungen (15) montiert ist.

15. Hubsystem (80) nach einem der Ansprüche 11 bis 14, wobei die gemeinsame Stütze (200) ferner mindestens zwei Stützbasen zum Stützen der mindestens zwei der Hubvorrichtungen umfasst, wobei jede der mindestens zwei Stützbasen an mindestens einem der Längsträger (106, 107) oder mindestens einem der Querträger (212, 213) montiert ist.

## Revendications

1. Procédé d'assemblage d'un système de levage à appareils multiples monté sur nacelle (80) à une nacelle (2) d'une éolienne (1), le procédé comprenant :
le montage d'une partie d'un support commun (200) pour les appareils de levage sur la nacelle (2) de l'éolienne (1) ;
le montage d'un premier appareil de levage sur la partie du support commun (200) ;
l'assemblage du support commun (200) à la nacelle (2), le support commun assemblé comprenant :
au moins deux ponts de palier de battement (202) fixés à au moins deux d'une pluralité de paliers de battement de boîte de vitesses (12a, 12b) et espacés transversalement dans la nacelle (2) ; et
des poutres longitudinales et transversales (212, 213) supportées sur les au moins deux de la pluralité de paliers de battement de boîte de vitesses (12a, 12b) ;
le fonctionnement du premier appareil de levage pour soulever un deuxième appareil de levage dans la nacelle (2) ;
le montage du deuxième appareil de levage sur au moins une partie du support commun (200) ;
le fonctionnement du premier ou du deuxième appareil de levage pour soulever un troisième appareil de levage dans la nacelle (2) ;
le montage du troisième appareil de levage sur le support commun (200) ;
le fonctionnement du premier, du deuxième ou du troisième appareil de levage pour soulever un quatrième appareil de levage dans la nacelle (2) ; et,
le montage du quatrième appareil de levage sur le support commun (200).

2. Procédé de la revendication 1, ladite partie du support commun (200) comprenant l'un des au moins deux ponts de palier de battement (202).

3. Procédé de la revendication 1 ou de la revendication 2, ledit quatrième appareil de levage étant plus robuste que le troisième appareil de levage, ledit troisième appareil de levage étant plus robuste que le deuxième appareil de levage, et ledit deuxième appareil de levage étant plus robuste que le premier appareil de levage.

4. Procédé de l'une quelconque des revendications 1 à 3, ledit premier appareil de levage pouvant être monté sur nacelle étant démonté après le montage du deuxième appareil de levage pouvant être monté sur la nacelle.

5. Procédé de l'une quelconque des revendications 1 à 3, ledit premier appareil de levage pouvant être monté sur nacelle étant démonté après le montage du troisième appareil de levage pouvant être monté sur nacelle.

6. Procédé de l'une quelconque des revendications 1 à 3, ledit premier appareil de levage pouvant être monté sur nacelle étant démonté après le montage du quatrième appareil de levage pouvant être monté sur nacelle.

7. Procédé de l'une quelconque des revendications 1 à 6,
ledit premier appareil de levage étant monté à proximité d'un premier côté de la nacelle (2) ;
ledit deuxième appareil de levage étant monté à proximité du premier côté de la nacelle (2), à proximité d'un second côté de la nacelle (2) ou à proximité d'une axe longitudinal de la nacelle (2) entre les premier et second côtés de la nacelle (2) ;
le troisième appareil de levage étant monté à proximité du premier côté de la nacelle (2), à proximité du second côté de la nacelle (2) ou à proximité d'une axe longitudinal de la nacelle (2) entre les premier et second côtés de la nacelle (2) ; et
le quatrième appareil de levage étant monté à proximité du premier côté de la nacelle (2), à proximité du second côté de la nacelle (2) ou à proximité d'une axe longitudinal de la nacelle (2) entre les premier et second côtés de la nacelle (2).

8. Procédé de l'une quelconque des revendications 1 à 6, ledit premier appareil de levage étant monté à proximité d'un premier côté de la nacelle (2), ledit deuxième appareil de levage étant monté à proximité d'un second côté de la nacelle (2), ledit troisième appareil de levage étant monté à proximité du premier ou du second côté de la nacelle (2), et ledit quatrième appareil de levage étant monté à proximité du premier côté de la nacelle (2), à proximité du second côté de la nacelle (2) ou à proximité d'un axe longitudinal de la nacelle (2) entre les premier et second côtés de la nacelle (2).

9. Procédé de l'une quelconque des revendications 1 à 8, au moins un composant du support commun (200) supportant le poids des appareils de levage.

10. Procédé de l'une quelconque des revendications 1 à 9, au moins trois des premier, deuxième, troisième et quatrième appareils de levage étant des grues.

11. Système de levage à appareils multiples monté sur nacelle (80), le système de levage (80) comprenant : un premier appareil de levage monté sur une nacelle (2) d'une éolienne (1) à proximité d'un premier côté de la nacelle (2) ;
un deuxième appareil de levage monté sur la nacelle (2) de l'éolienne (1) à proximité du premier côté de la nacelle (2), à proximité d'un second côté de la nacelle (2) ou à proximité d'un axe longitudinal de la nacelle (2) entre le premier côté et le second côté de la nacelle (2) ;
un troisième appareil de levage monté sur la nacelle (2) de l'éolienne (1) à proximité du premier côté de la nacelle (2), à proximité du second côté de la nacelle (2) ou à proximité d'un axe longitudinal de la nacelle (2) entre les premier et second côtés de la nacelle (2) ;
un quatrième appareil de levage monté sur la nacelle (2) de l'éolienne (1) à proximité du premier côté de la nacelle (2), à proximité du second côté de la nacelle (2) ou à proximité d'un axe longitudinal de la nacelle (2) entre les premier et second côtés de la nacelle (2) ; et
un support commun (200) pour les premier, deuxième, troisième et quatrième appareils de levage, l'éolienne (1) comprenant une pluralité de paliers de battement de boîte de vitesses (12a, 12b), le support commun (200) étant monté sur au moins deux de la pluralité de paliers de battement de boîte de vitesses (12a, 12b), **caractérisé en ce que** le support commun (200) comprend :
au moins deux ponts de palier de battement (202) fixés à les au moins deux de la pluralité de paliers de battement de boîte de vitesses (12a, 12b) et espacés transversalement dans la nacelle (2) ; et
des poutres longitudinales (106, 107) et des poutres transversales (212, 213) supportées sur les au moins deux de la pluralité de paliers de battement de boîte de vitesses (12a, 12b).

12. Système de levage (80) de la revendication 11, ledit premier appareil de levage étant monté à proximité d'un premier côté de la nacelle (2), ledit deuxième appareil de levage étant monté à proximité d'un second côté de la nacelle (2), ledit troisième appareil de levage étant monté à proximité du premier ou du second côté de la nacelle (2), et ledit quatrième appareil de levage étant monté à proximité du premier côté de la nacelle (2), à proximité du second côté de la nacelle (2) ou à proximité d'un axe longitudinal de la nacelle (2) entre les premier et second côtés de la nacelle (2).

13. Système de levage (80) de la revendication 11 ou de la revendication 12, ledit quatrième appareil de levage étant plus robuste que le troisième appareil de levage, ledit troisième appareil de levage étant plus robuste que le deuxième appareil de levage, et ledit deuxième appareil de levage étant plus robuste que le premier appareil de levage.

14. Système de levage (80) de l'une quelconque des revendications 11 à 13, ledit support commun (200) étant également monté sur au moins deux fixations de boîtier de roulement principal (13) ou étant également monté sur au moins deux poches d'entraînement de lacet (15).

15. Système de levage (80) de l'une quelconque des revendications 11 à 14, ledit support commun (200) comprenant en outre au moins deux bases de support pour supporter les au moins deux des appareils de levage, chacune des au moins deux bases de support étant montée sur au moins l'une des poutres longitudinales (106, 107) ou au moins l'une des poutres transversales (212, 213).
